# EUROPEAN PATENT APPLICATION

(11) **EP 1 217 411 A2**
(43) Date of publication of application: **26.06.2002**
(21) Application number: 01500169.6
(22) Date of filing: 05.07.2001
(51) Int. Cl.: G02B 6/44

(54) **Main optic fibre distribution frame**

(30) Priority: 27.10.2000 ES 200002628
(71) Applicant: Telefonica, S.A., 28013 Madrid (ES)
(72) Inventor: Diaz Cortijo, D.Jesus, c/o Telefonica S.A., 28020 Madrid (ES)
(74) Representative: Sanchez del Campo Gonzalez de Ubierna, Ramon

(57) **Abstract**

A main optic fibre distribution frame consisting of frames (1) and support boards (2), as well as coupling holders (7), storage unit (4), distribution trays (5) and masks with cardholder (6) and (16), and incorporating a cable support (8) and cable guides (9), the frame consisting of "U" shaped sections and having holes and fixed and adjustable legs and with cable guiding clamps inside the frames (1).

## Description

### PURPOSE OF THE INVENTION

This descriptive report refers to an utility model application for a main optic fibre distribution frame whose purpose lies in permitting the absorption of the successive extensions of the optic fibre network involving the use of cables with a large number of fibres to later perform segregations, multifibre or monofibre cables, allowing the installation to be flexible for the different services the telecommunications boards offer the clients.

### FIELD OF THE INVENTION

This invention is applicable to the telecommunications industry and more specifically in the optic fibre network incorporated in telecommunications.

### BACKGROUND OF THE INVENTION

The applicant is aware of the current existence of some optic fibre distribution frames although he has no knowledge of the existence of a main optic fibre distribution frame, which allows successive extensions of the optic fibre network to be absorbed, involving the use of cables with a large number of fibres so as to be able to perform segregations later on, as well as multifibre or monofibre cables, hence permitting that the plant where the distribution frame, object of this invention, is to be installed is flexible for the different services the telecommunications boards may offer to their clients.

### DESCRIPTION OF THE INVENTION

The main optic fibre distribution frame proposed by the invention permits operation in the interconnection model, splicing and connectors coming from the network and of the equipment from the frame itself, and/or cross-connections, where the fibre connectors from the outside plant terminate and from equipment on different frames, performing the connection between the latter by means of bridges with fixed lengths, common for any position.

Likewise, it should be checked that the access to this main optic fibre distribution frame is from the front and allows the cable installation to be made from the upper or lower parts, involving an adjustment of the assembly to the room, where it is to be located, conventionally (entrance of the cables from the upper part) or single (entrance of the cables from the lower part).

The main optic fibre distribution frame consists of the following basic units. Namely,
- Frame
- Support board for splicing trays.
- Support board for coupling holders
- Support board with storage unit.
- Support board for distribution trays.
- Support board with cardholder
- Set of coupling holders and
- Set of splicing trays.

The frame consists of "U" shaped sections, duly soldered, where there are a series of holes to fix the different support boards, according to plant application and requirements. In the lower part of the frame, there are some fixed and adjustable legs for their installation in the relevant transmission room.

Over the support boards for coupling holders and trays, once fixed to the frame, clamps are fitted to the sides to guide the cables inside the frame, likewise being arranged on said boards the sets of coupling holders and the splicing trays to separate fibres, according to the plant requirements.

In the event that the configuration as an interconnection in a same frame is required, splicing sets will be arranged in the lower part and coupling holders in the upper part.

Likewise, when the crossed connection configuration is required, the frames will be arranged as coupling holders up to a total of eight sets per frame , placing between them a frame with storage units..

Also, in the adjacent installation, there a frame may be provided with splicing trays up to a total of eight sets per frame, depending on the characteristics of the installation.

The set of coupling holders consists of a series of guides and coupling holders to cover a capacity of sixty-four connections by means of an SC type optic fibre connector, sliding the coupling holder towards the front and permitting access to the different connectors, up to a total of eight, blocking the latter and preventing its involuntary release.

In the front part, there is a mask with an antisliding cardholder for the protection and management of the distribution frame.

On the splicing tray support, there may be up to a total of sixteen and a rotation axis has been foreseen permitting access to the individual tray, and the blocking one for undesired movements thereof, allowing each splicing tray to house up to a total of eight splices. In the front part, there is a mask with a protection and management cardholder of the distribution frame.

The support with storage units has two grids over which the optic fibre bridge is hung, absorbing the excessive length of the cable used for connections between fibres terminating on the connector frames.

On the upper part of the frame, with coupling holders and/or splicing trays, the support with cardholder is fitted to make the inspections necessary for good distribution frame management.

### DESCRIPTION OF THE DRAWINGS

To complete the description being made and to permit a better understanding of the characteristics of the invention, this descriptive report is accompanied by, as an integral part thereof, a set of plans in which, with an illustrative and non-limiting character, show the following:

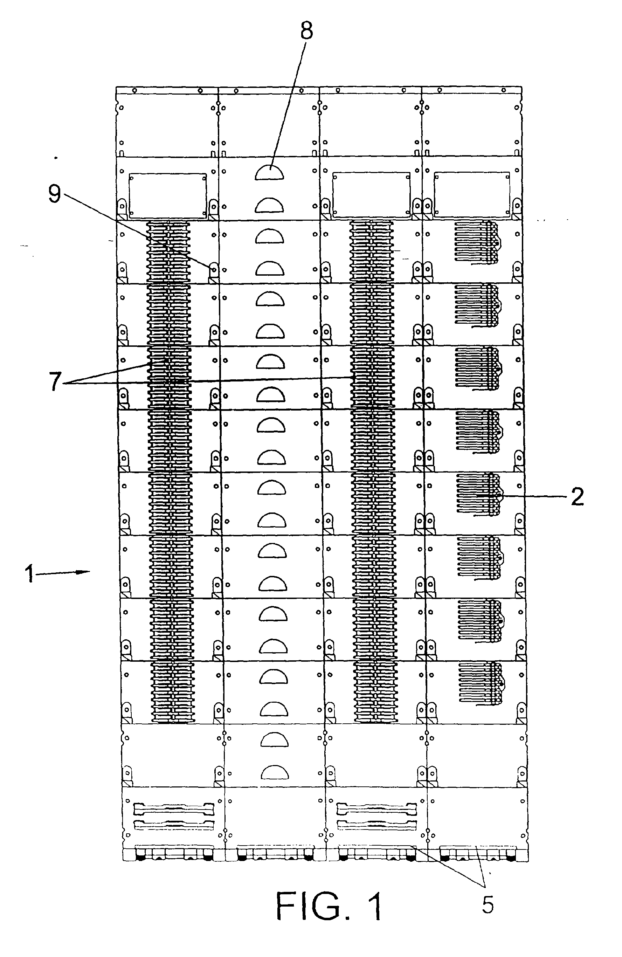

Figure 1 shows different items fitted on a frame corresponding to the invention regarding a main optic fibre distribution frame, where, specifically observing from left to right, there is a first and third frame with coupling holders, a second frame with storage units and a forth one with splicing trays, the frame appearing in this graphic display without the wiring.

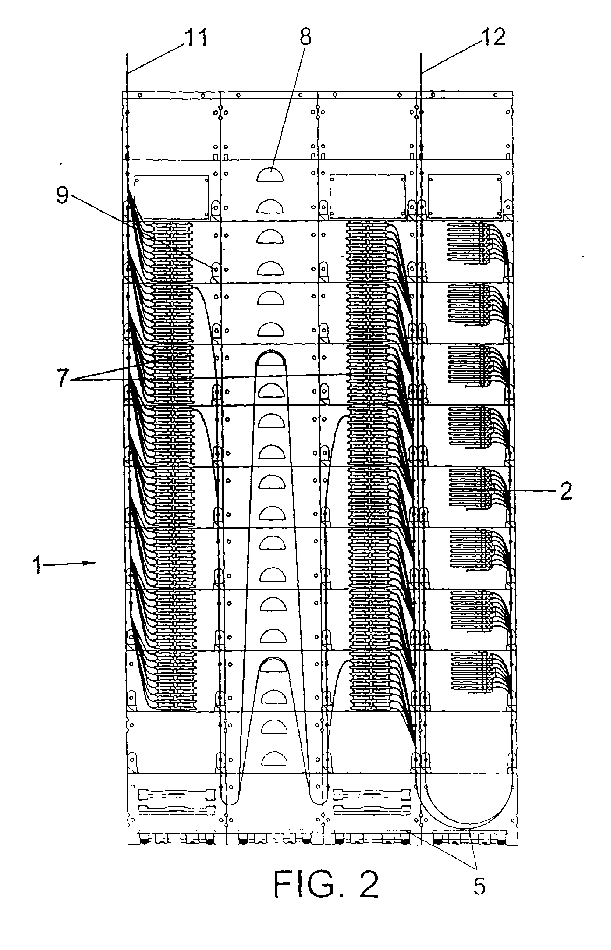

Figure 2 consists of an example of cabling for the items shown in figure number 1. Particularly, one can observe what the configuration would be with a crossed connection and in it, from left to right, a first frame with eight sets of coupling holders is shown, as well as a second frame with storage units, a third frame with eight sets of coupling holders and a fourth frame with eight sets of splicing trays.

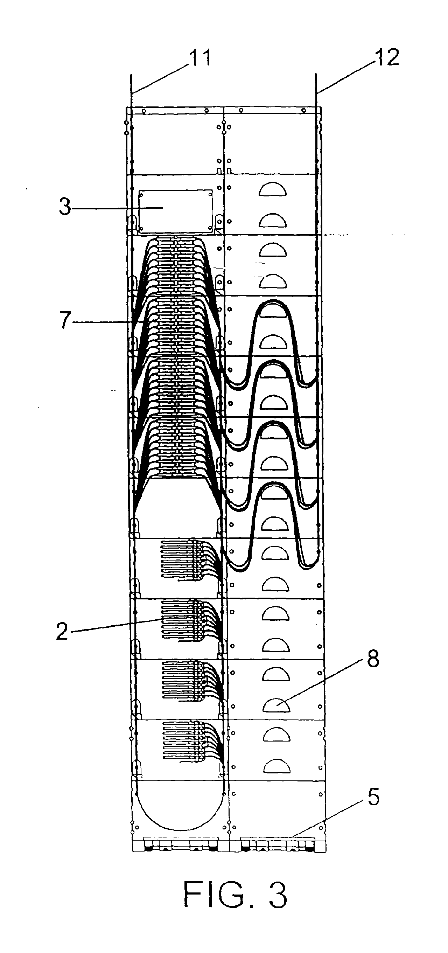

Figure 3 shows the modular installation on the frame, that is, the interconnection configuration, there being, on the upper part of the first frame, a support board with a cardholder, followed by a set of four support boards for coupling holders with their corresponding coupling holders, as well as the support boards for splicing trays with their trays, and, in the lower part of said frame, the support board for the distribution tray, the cable guides being on the sides.

Figure number 4 shows the installation in the distribution frame object of the invention, with different masks for the different units, being the frame provided with the corresponding cabling.

Figure number 5 shows the mask for coupling holder units, the latter being slid towards the front.

Figure number 6 shows the folded splicing tray unit mask.

Figure 7 corresponds to a perspective view of the splicing tray.

Figure 8 shows a detail of cable entry/exit in the splicing tray shown in figure 7.

Figure 9 corresponds to a plan and profile view through its lesser and greater sides of the splicing tray shown in a perspective view in figure 7.

Figure 10 shows in different positions, the splicing tray support shown in figures 7, 8, 9.

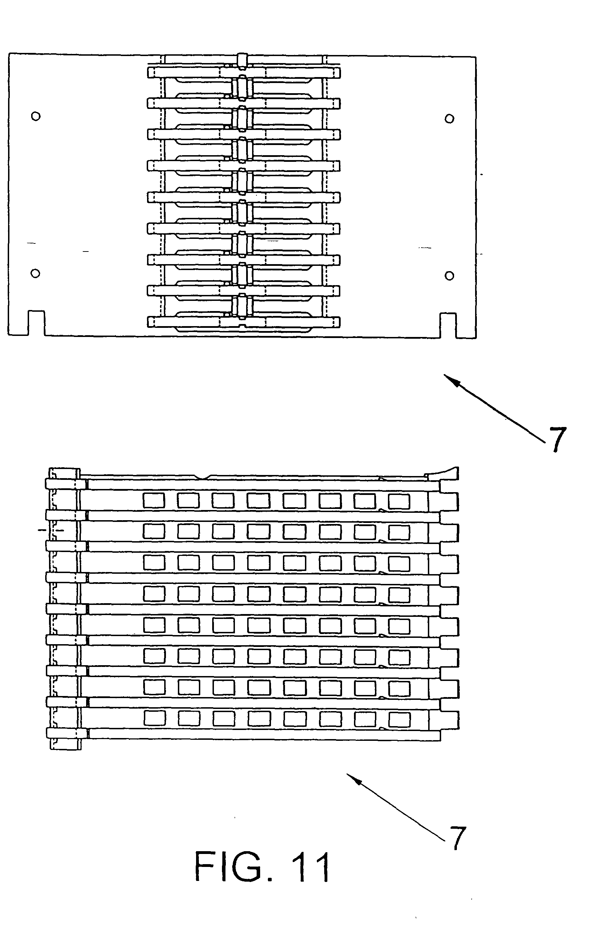

Figure 11 finally shows different views of the coupling holder support assembly.

### PREFERRED EMBODIMENT OF THE INVENTION

Referring to figure 1, it may be seen how the frames (1) shown in this figure without cabling, over which the splicing trays (2) are located with their support boards, as well as the set of coupling holders (7) with their support boards and cable guides (9).

In figure 2, corresponding to a new view of the distribution frame with cabling, compared with that shown in figure 1, the references (7) and (9) are repeated, respectively corresponding to the set of coupling holders and the cable guide, giving reference (5) to the support board for distribution trays and (8) to the storage unit.

In figure 3 there are splicing trays (2), the support board (5) for distribution trays, the set of coupling supports (7) and the storage unit (8).

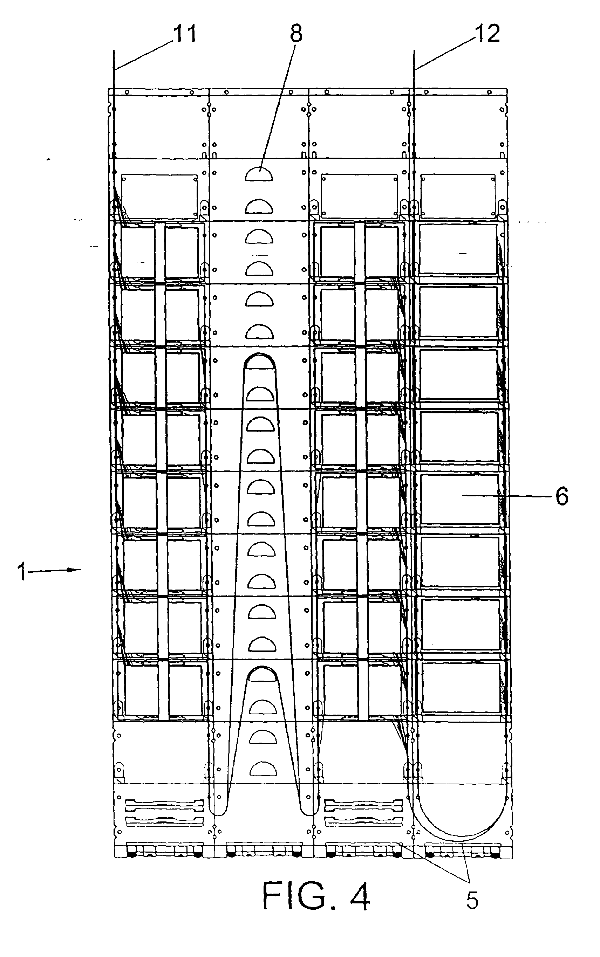

In figure 4 (5) corresponds to the support board for distribution trays, the mask (6) for splicing trays and the storage unit (8).

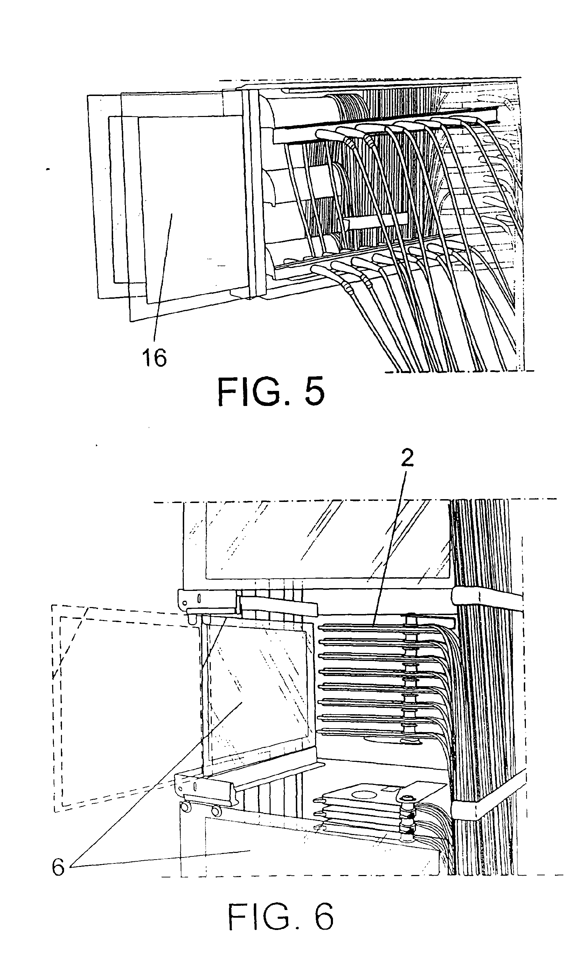

In figure 5, corresponding to cardholders for coupling holder units (16) corresponds to the mask for the coupling holder unit.

In figure 6, corresponding to the splicing tray unit with the folded mask, (2) corresponds to the splicing trays with their relevant support board, as well as the mask (6).

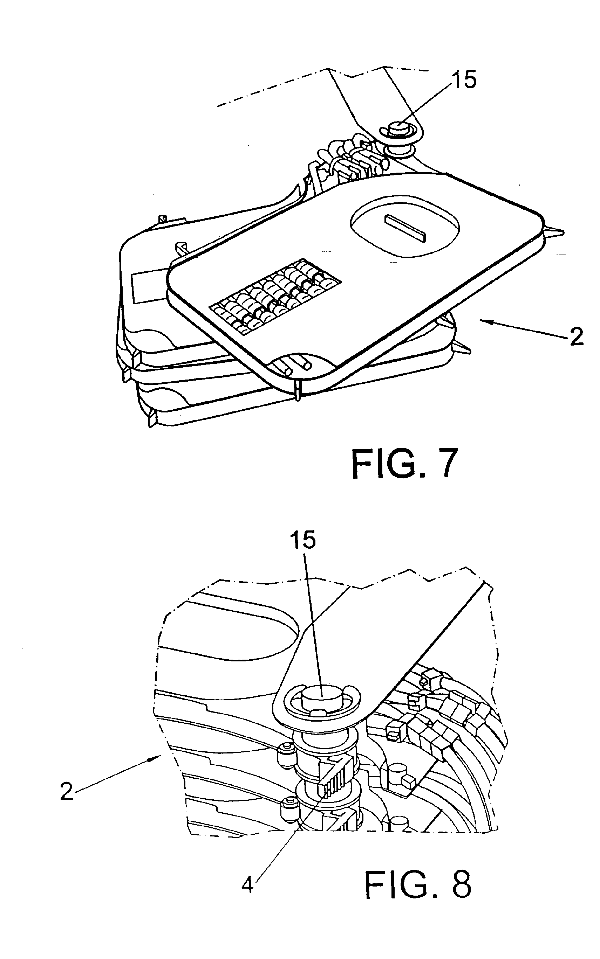

Figures 7 and 8 clearly show a perspective view of the splicing tray (2) through the upper part in figure 7, whilst in figure number 8, a detail of the cable entry/exit of the splicing tray (2) is shown..

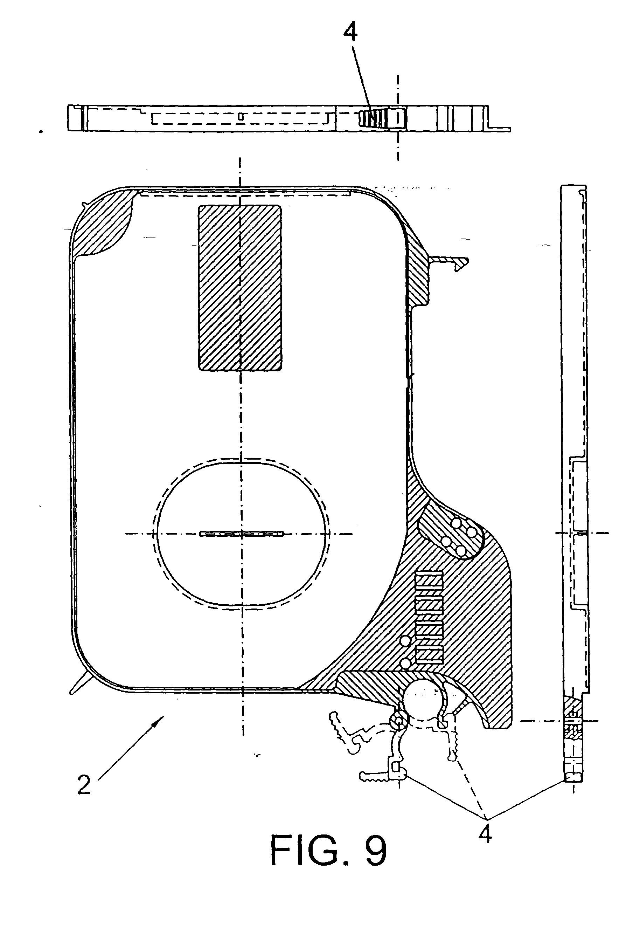

Figure 9 corresponding to a plan view, as well as side elevation through its lesser and greater sides, (4) corresponds to the steel pin by means of which the tray (2) is fixed to the support axis, the pin remaining duly clipped.

The invention is implemented with a support board with a storage unit.

In figure 2, (11) and (12) correspond to connections to the mains and equipment, respectively.

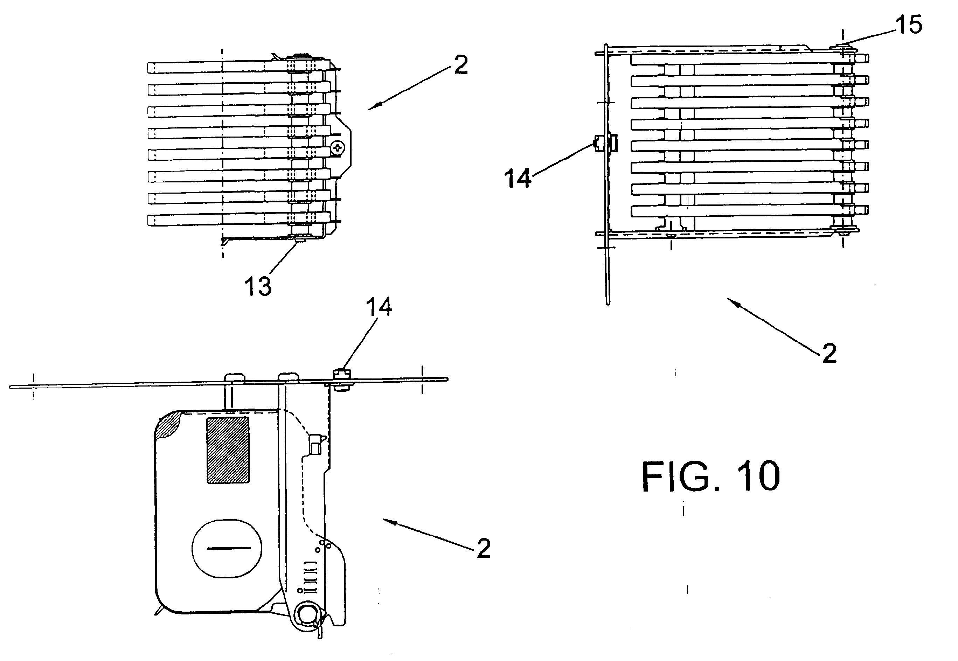

In Figure 10, where the tray supports (2) are shown, (13) corresponds to two screws, reference (14) shows an assembly consisting of a screw and a nut, together with a washer, as well as the washer (15).

Summarising, the frame (1) is formed from "U" shaped sections which are duly soldered, in which there are a series of holes to fix the different support boards, according to the application and requirements of the plant, there being located in the lower part thereof, some fixed and adjustable legs for its installation in the corresponding transmission room.

On the support boards for the coupling holders (7) and trays (2), once fixed to the frame (1), clamps are fitted on the sides destined to guide the cables in the frame (1) and likewise, in the mentioned boards, the sets of coupling holders and splicing trays (2) will be arranged to separate the fibres according to the requirements of the plant.

If configuration as an interconnection on a same frame is required, there will be splicing assemblies on the lower part and coupling holders on the upper part.

The invention also considers the possibility of permitting a crossed connection configuration by means of two frames with coupling holders up to a total of eight sets on each frame and between both, a frame with storage units will be located.

As has already been said, on an adjacent installation, there may be a frame with splicing trays, up to a total of eight sets on each frame, likewise depending on the characteristics of the installation.

The invention is equipped with a mask having a foldable cardholder and due to the existence of a tray rotation tower, the coupling of a maximum of 16 splicing trays may be achieved.

Due to its characteristics, the invention features the easy addition of frames according to the requirements, absorbing the successive extensions of the optic fibre network.

The implementation of cardholders on the masks of the coupling holder assembly permits the necessary inspections to be made for good distribution frame management, besides serving as protection for the coupling holder assembly.

Due to the structure of the splicing tray, which has a suitable curvature, allowing the entry and exit cables to the tray to slide following said curvature, and permitting that when the tray is rotated the cables are maintained in place and hence, do not negatively affect the optic transmission conditions thereof.

## Claims

1. A main optic fibre distribution frame, **characterised in** consisting of frames (1) and several support boards for splicing trays (2), coupling holders (7), storage unit (4), distribution trays (5) and masks with cardholder (6) and (16), having a set of coupling holders (7), cable support (8) and cable guides (9), the frame consisting of "U" shaped sections with holes, having in the lower part fixed and adjustable legs and, over the support boards for splicing trays (2) and coupling holders (7), there are clamps guiding the cables inside the frame.

2. A main optic fibre distribution frame, **characterised in that** it incorporates two frames with coupling holders with up to a total of eight sets on each frame, between which there is a frame with storage units and adjacently, a frame with splicing trays (2) with up to a total of eight sets on each frame.

3. A main optic fibre distribution frame, according to the previous claims, **characterised in that** the set of coupling holders consists of numerous guides and coupling holders with up to sixty-four connections with the incorporation of an optic fibre connector, having a mask with a sliding and foldable cardholder in the front part thereof.

4. A main optic fibre distribution frame, **characterised in that** the support with storage units has two grids over which the optic fibre bridge is hung.

5. A main optic fibre distribution frame, according to the previous claims, **characterised in that** the cardholder support is located in the upper part of the frame (1) with coupling holders and/or splicing trays (2).

6. A main optic fibre distribution frame, according to the previous claims, **characterised in that** it has connections to the mains (11) and to equipment (12), as well as having a storage unit (8) and guides (9) to distribute cables.

7. A main optic fibre distribution frame, according to the previous claims, **characterised in that** the tray support (2) has two screws (13), as well as a set (14) consisting of a nut, a screw and a flat washer, likewise showing on the opposite end of the screws (13) a washer (15).

8. A main optic fibre distribution frame, according to the previous claims, **characterised in that** the mask with cardholder (6) may be removed and is foldable.

9. A main optic fibre distribution frame, according to the previous claims, **characterised in that** the entry of the splicing tray has a curved configuration to prevent additional losses in the cables.
